# EUROPEAN PATENT APPLICATION

(11) **EP 1 850 514 A2**
(43) Date of publication of application: **31.10.2007**
(21) Application number: 06024041.3
(22) Date of filing: 20.11.2006
(51) Int. Cl.: H04H 1/00, H04B 1/18

(54) **Device and method for receiving a DMB signal in wireless terminal**

(30) Priority: 28.04.2006 KR 20060038723
(71) Applicant: Samsung Electronics Co., Ltd., Suwon-si, Gyeonggi-Do (KR)
(72) Inventor: Sakong, Min, Yeongtong-gu Suwon-si Gyeonggi-do (KR); Lee, Jae-Ho, Yeongtong-gu Suwon-si Gyeonggi-do (KR); Kim, Young-Hwan, Yeongtong-gu Suwon-si Gyeonggi-do (KR)
(74) Representative: Lang, Johannes

(57) **Abstract**

Disclosed are a device and a method for receiving a Digital Multimedia Broadcasting (DMB) signal in a wireless terminal, which can receive a DMB signal corresponding to each channel. The apparatus includes an automatic matching unit resonating at a frequency band corresponding to a selected channel; a DMB reception unit outputting a DMB signal corresponding to the selected channel, which is received through the resonated frequency band using the automatic matching unit; and a control unit controlling the automatic matching unit to resonate at the frequency band corresponding to the selected channel and the DMB reception unit to output the DMB signal corresponding to the selected channel, which is received through the resonated frequency band. Further, the method includes: resonating at a frequency band corresponding to a selected channel if the channel is selected in a DMB mode of a wireless terminal; and outputting a DMB signal corresponding to the selected channel, which is received through the resonated frequency band.

## Description

### BACKGROUND OF THE INVENTION

### 1. Field of the Invention

The present invention relates to a device and a method for receiving a Digital Multimedia Broadcasting signal (hereinafter, referred to as "DMB signal") in a wireless terminal, and more particularly to a device and a method for receiving a DMB signal in a wireless terminal, which can receive a DMB signal corresponding to each channel.

### 2. Description of the Related Art

Digital Multimedia Broadcasting (DMB) provides sound quality similar to the sound quality of CDs, makes possible data or image service and the like, and provides a superior fixed and mobile reception quality. DMB is classified into a terrestrial DMB and a satellite DMB in accordance with a transmission means (terrestrial wave/satellite). The Digital Multimedia Broadcasting service provides fixed receivers with various high-quality digital contents (video/audio/data) through an economical broadcasting network.

The Terrestrial DMB corresponds to only a terrestrial broadcaster and provides audio and video services and the like using a terrestrial repeater. The satellite DMB provides a service in a frequency band of 2.6 to 2.655 GHz corresponding to a microwave frequency (UHF) that is much higher than a terrestrial wave. The terrestrial DMB radiates a radio wave from a transmitting station. For example, a transmitting station at Mt. Kwanak in Korea will cover a metropolitan region. In contrast, the satellite DMB has a characteristic in that it radiates a radio wave toward the Korean Peninsula from a satellite outside the atmosphere, making nationwide broadcasting possible.

Currently, the terrestrial DMB applied to a wireless terminal provides two channels (8ch, 12ch), and the two channels use frequency bands of 180 to 186 MHz and 204 to 210 MHz, respectively.

However, there is a problem in that an antenna provided to a wireless terminal for receiving the terrestrial DMB, e.g. a helical or whip antenna, has only a frequency band of 6 to 10 MHz so that it does not correctly receive channels for the terrestrial DMB.

### SUMMARY OF THE INVENTION

Accordingly, the present invention has been made to solve the above-mentioned problems occurring in conventional systems, and it is an object of the present invention to provide a device and a method for receiving a DMB signal in a wireless terminal, which can receive a DMB signal corresponding to each channel.

In order to accomplish this object of the present invention, according to an aspect of the present invention, there is provided a device for receiving a Digital Multimedia Broadcasting (DMB) signal in a wireless terminal, which includes an automatic matching unit resonating at a frequency band corresponding to a selected channel; a DMB reception unit outputting a DMB signal corresponding to the selected channel, which is received through the resonated frequency band using the automatic matching unit; and a control unit controlling the automatic matching unit to resonate at the frequency band corresponding to the selected channel and the DMB reception unit to output the DMB signal corresponding to the selected channel, which is received through the resonated frequency band.

In order to accomplish this object of the present invention, according to another aspect of the present invention, there is provided a method for receiving a DMB signal in a wireless terminal, which includes resonating at a frequency band corresponding to a selected channel if the channel is selected in a DMB mode of a wireless terminal; and outputting a DMB signal corresponding to the selected channel, which is received through the resonated frequency band.

### BRIEF DESCRIPTION OF THE DRAWINGS

The above and other objects, features and advantages of the present invention will be more apparent from the following detailed description taken in conjunction with the accompanying drawings, in which:
FIG. 1 is a block diagram showing a device for receiving a DMB signal corresponding to each channel in a wireless terminal according to the present invention;
FIG. 2 is a flowchart illustrating a process of receiving a DMB signal corresponding to each channel in a wireless terminal according to the present invention; and
FIGS. 3A and 3B are charts illustrating the frequency band of a DMB signal corresponding to each channel according to the present invention.

### DETAILED DESCRIPTION OF THE PREFERRED EMBODIMENTS

Hereinafter, preferred embodiments of the present invention will be described with reference to the accompanying drawings. In the following description, the same reference numerals are used for designating the same elements in the accompanying drawings.

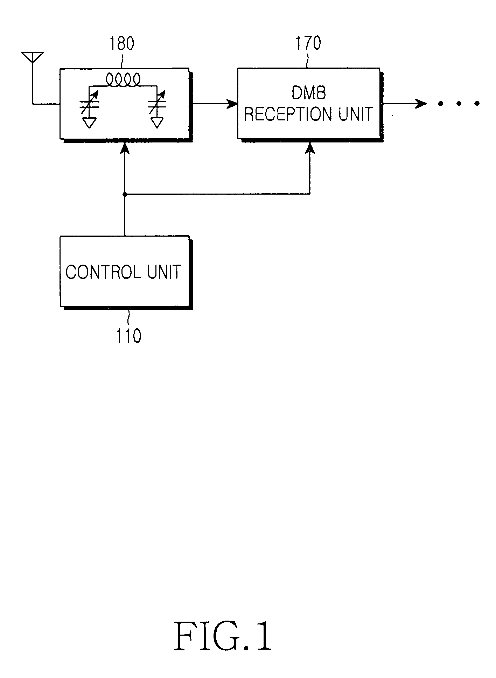

Fig. 1 is a block diagram showing a device for receiving a DMB signal corresponding to each channel in a wireless terminal according to the present invention. Referring to Fig. 1, an automatic matching unit 180 functions to resonate at a frequency band of a correspondent channel so as to receive a DMB signal corresponding to each channel. The automatic matching unit 180 is provided to an antenna matching end of a wireless terminal and comprises a fixed inductor and a variable capacitor.

The automatic matching unit 180 has at least one capacitor bank, and the capacitor bank forms a structure in which a plurality (n) of capacitors are connected to one another.

The values of the capacitors (C) included in the capacitor bank are sequentially increased as values of C/2, C/4, C/8, ..., C/2ⁿ, and each of the capacitors (C) is connected to a switch so as to have 1 or 0 when the switch is turned on/off. Further, the total sum value of the capacitors (C) when the switch is turned on is "Cₜₒₜₐₗ=0*C/2+1*C/4+0*C/8+...+1*C/2ⁿ". For example, if one capacitor bank forms a structure in which 8 capacitors (C) are connected to one another, the one capacitor bank may have 2⁸, i.e., values of 256 capacitors (C). It will be recognized that operation of the switch(es) will allow for a plurality of other total sum capacitive values.

Therefore, the automatic matching unit 180 extracts the value of a capacitor (C) for resonating at a frequency band corresponding to each channel among the values of a plurality of capacitors (C) included in at least one capacitor bank under the control of a control unit 110 and then allows a switch to be turned on/off, so that the total sum value of the capacitors (C) is modified. The automatic matching unit 180 changes an electrical length of an antenna through the modified value of the capacitor (C) so that it functions to resonate at a frequency band corresponding to each channel.

A DMB reception unit 170 functions to output a DMB signal of a correspondent channel, which is received through the frequency band resonated by the automatic matching unit 180.

The DMB reception unit 170 comprises a tuner, a DMB processor and a codec. The tuner receives a DMB signal of a correspondent channel through the frequency band resonated by the automatic matching unit 180 under the control of the control unit 110 and functions to convert the frequency of the received DMB signal. The DMB processor demodulates the DMB signal received from the tuner under a control of the control unit 110 and separates audio and video signals from the demodulated DMB signal to perform the decoding. The codec decodes the audio and video signals separated and received from the DMB processor into an MPEG-standard signal under a control of the control unit 110 so as to control the decoded audio and video signals to be respectively output to a speaker through an audio processor and a display through a video processor.

The control unit 110 also functions to control the general operation of a wireless terminal. Further, if a channel is selected by a user in a DMB mode according to the present invention, the control unit 110 controls the automatic matching unit 180 to resonate at a frequency band corresponding to the selected channel.

Furthermore, the control unit 110 controls a DMB signal corresponding to the selected channel received through the frequency band resonated by the automatic matching unit 180 to be output through the DMB reception unit 170 according to the present invention.

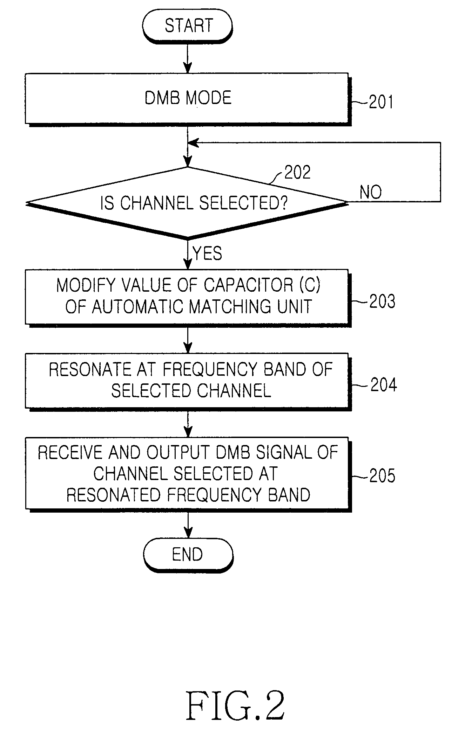

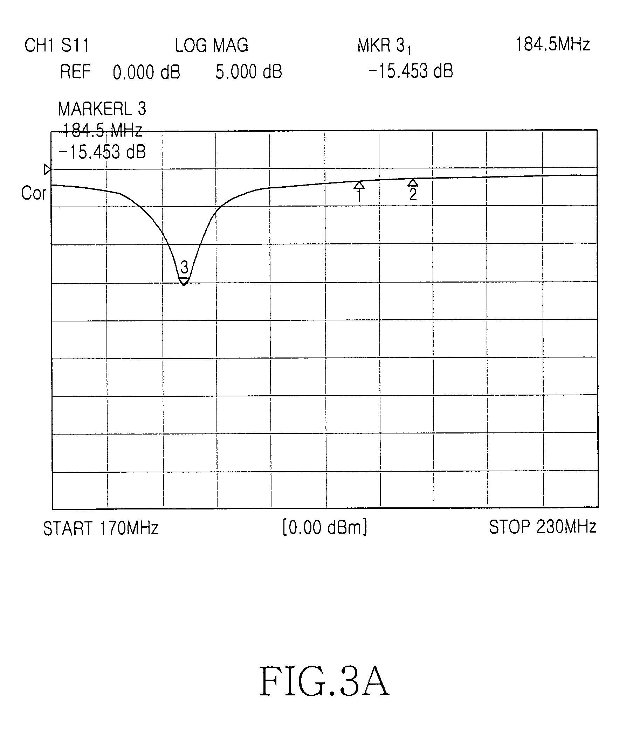

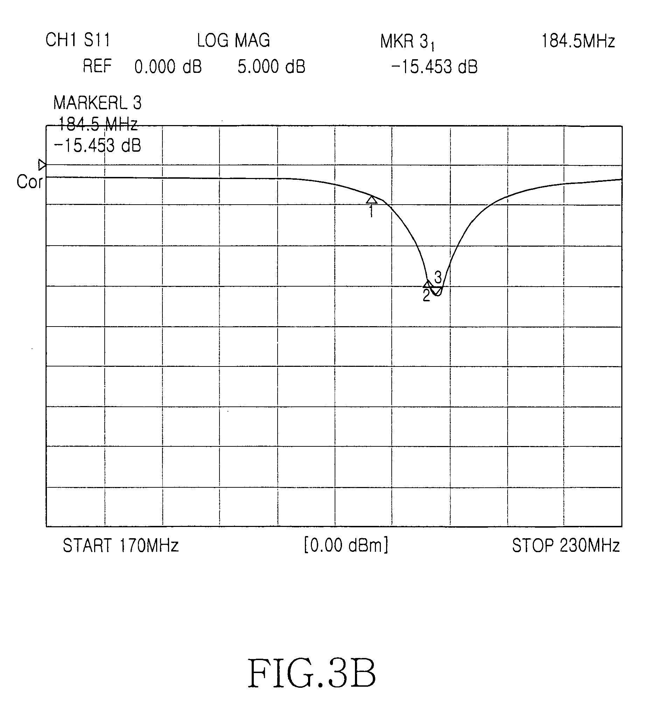

An operation of receiving a DMB signal corresponding to each channel in a wireless terminal as described above will be described in detail with reference to FIGS. 2 and 3.

FIG. 2 is a flowchart illustrating a process of receiving a DMB signal corresponding to each channel in a wireless terminal according to the present invention, and FIGS. 3a and 3b are charts illustrating the frequency band of a DMB signal corresponding to each channel according to the present invention.

Referring to FIG. 2, if a channel is selected by a user at step 201 that is a DMB mode of the wireless terminal, the control unit 110 detects this and controls the automatic matching unit 180 to resonate at a frequency band corresponding to the selected channel by applying a certain voltage thereto at step 202.

An operation of the automatic matching unit 180 resonating at a frequency band corresponding to the selected channel will now be discussed. The automatic matching unit 180 the value for moving a resonance point to the frequency band corresponding to the selected channel among the values of a plurality of capacitors (C) included in the automatic matching unit 180 and allows the switch to be turned on/off so that the value of the capacitor (C) is modified at step 203.

The automatic matching unit 180 changes the electrical length of an antenna through the modified value of the capacitor (C) so that it resonates at the frequency band that corresponds to the selected channel at step 204.

If the automatic matching unit 180 resonates at the frequency band corresponding to the selected channel at step 204, the control unit 110 outputs a DMB signal corresponding to the selected channel received through the resonated frequency band to the DMB reception unit 170. The DMB reception unit 170 receives the DMB signal corresponding to the selected channel to demodulate, decode and then output it under a control of the control unit 110 at step 205.

For example, if channel 8 is selected in a DMB mode of the wireless terminal, the automatic matching unit 180 resonates at a frequency band of 180 to 186 MHz corresponding to channel 8 under a control of the control unit 110. FIG. 3A illustrates a view of the frequency band corresponding to channel 8, which is resonated by the automatic matching unit 180.

The control unit 110 controls a DMB signal corresponding to channel 8, which is received through the resonated frequency band to be output through the DMB reception unit 170, as shown in Fig. 3A.

Further, if channel 12 is selected in a DMB mode of the wireless terminal, the automatic matching unit 180 resonates at a frequency band of 204 to 210 MHz corresponding to channel 12 under a control of the control unit 110. FIG. 3B illustrates a view of the frequency band corresponding to channel 12, which is resonated by the automatic matching unit 180.

The control unit 110 controls a DMB signal corresponding to channel 12, which is received through the resonated frequency band to be output through the DMB reception unit 170, as shown in Fig. 3B.

In FIGS. 3A and 3B, the X-axis denotes a frequency and the Y-axis denotes a reflection coefficient. The reflection coefficient (r, gamma) refers to an index in that a reflection amount generated due to an impedance difference at a certain connection end is simply calculated as a ratio of input voltage to reflection voltage.

As described above, the present invention has an advantage in that there is provided a device and a method for receiving a digital multimedia broadcasting signal in a wireless terminal, which can receive a DMB signal corresponding to each channel so that DMB signals of all the channels can be received to allow the mobile terminal user to see and hear a broader range of Broadcast Multimedia content.
While the invention has been shown and described with reference to certain preferred embodiments thereof, it will be understood by those skilled in the art that various changes in form and details may be made therein without departing from the spirit and scope of the invention as defined by the appended claims.

## Claims

1. A device for receiving a Digital Multimedia Broadcasting (DMB) signal in a wireless terminal, the device comprising:
an automatic matching unit resonating at a frequency band corresponding to a selected channel;
a DMB reception unit outputting a DMB signal corresponding to the selected channel, which is received through the resonated frequency band of the automatic matching unit; and
a control unit controlling the automatic matching unit to resonate at the frequency band corresponding to the selected channel and the DMB reception unit to output the DMB signal corresponding to the selected channel, which is received through the resonated frequency band.

2. The device as claimed in claim 1, wherein the automatic matching unit includes a fixed inductor and a variable capacitor.

3. The device as claimed in claim 1, wherein the automatic matching unit is provided to an antenna matching end.

4. A method for receiving a Digital Multimedia Broadcasting (DMB) signal in a wireless terminal, comprising:
resonating at a frequency band corresponding to a selected channel if the channel is selected in a DMB mode of a wireless terminal; and
outputting a DMB signal corresponding to the selected channel, which is received through the resonated frequency band.

5. The method as claimed in claim 4, wherein the step of resonating at the frequency band comprises:
applying a certain voltage to the automatic matching unit if the channel is selected;
modifying the value of a capacitor of the automatic matching unit to which the certain voltage is applied; and
resonating at the frequency band corresponding to the selected channel through the modified value of the capacitor.
